(19)

Europäisches
Patentamt
European
Patent Office
Office européen
des brevets

(11) **EP 4 760 554 A1**

(12) **EUROPEAN PATENT APPLICATION**

(43) Date of publication:
**17.06.2026 Bulletin 2026/25**

(21) Application number: **25152463.3**

(22) Date of filing: **17.01.2025**

(51) International Patent Classification (IPC):
**G06F 21/16** (2013.01)        **G06N 3/09** (2023.01)

(52) Cooperative Patent Classification (CPC):
**G06F 21/16; G06N 3/045; G06N 3/08; G06N 3/09;**
**G06N 3/044**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.12.2024 EP 24219259**

(71) Applicant: **AUMOVIO Germany GmbH
60488 Frankfurt am Main (DE)**

(72) Inventor: **Wang, Yi
339780 Singapore (SG)**

(74) Representative: **Aumovio Corporation
AUMOVIO Germany GmbH
Taunusstraße 36
80807 München (DE)**

(54) **APPARATUS, COMPUTER PROGRAM, NEURAL NETWORK, TRAINING METHOD, AND
METHOD FOR WATERMARKING DATA**

(57)     Embodiments of the present disclosure relate to an apparatus, a computer program, a neural network, a training method, a method for intrusion detection, and a method for watermarking data. Embodiments of the watermarking method comprise obtaining data, determining one or more data features of the data, generating a watermark for the data using a predefined function and the data features as input for the function, and embedding the watermark in the data to obtain watermarked data.

200

| Obtaining data | 210 |
| Determining one or more data features | 220 |
| Generating a watermark for the data | 230 |
| Embedding the watermark | 240 |

Fig. 2

EP 4 760 554 A1

**Description**

Embodiments of the present disclosure relate to an apparatus, a computer program, a neural network, a training method, and a method for watermarking data. In particular, the concept proposed herein relates to a watermarking concept for detecting manipulations or an exchange of a neural network for intrusion detection.

Intrusion detection involves monitoring and analyzing network or system activities for malicious actions or policy violations. It aims to identify unauthorized access or anomalies that could indicate a security breach. In practice, intrusion detection systems (IDS) may be used in various fields of technology. In particular, intrusion detection may be applied automotive applications or network applications.

In the automotive industry, intrusion detection is crucial for safeguarding connected vehicles against cyber threats. Vehicles may be equipped with one or more electronic control units (ECUs) and communication interfaces, making them vulnerable to attacks. An exemplary application is the use of IDS to monitor in-vehicle networks, such as the Controller Area Network (CAN) bus, for unusual patterns that could signify an attack. By detecting and responding to these threats in real-time, IDS helps ensure the safety and security of both the vehicle and its occupants. With the rapid advanced development of automotive intelligence and connectivity, the CAN bus serves as the central network for in-vehicle communication, facilitating critical communication tasks among automotive computer control systems. However, due to its broadcast transmission characteristics, it is vulnerable to various security threats, such as, Denial of Service (DoS) attacks, fuzzy attacks, and spoofing attacks, etc.

IDS for CAN bus communication may use deep learning models including a recurrent neural network (RNN). However, RNN face similar threats from adversarial black-box attacks as Convolutional Neural Networks (CNN) models. In adversarial black-box attacks an attacker does not require to know the internal details of a target model. By observing the model's output results for the given input samples, the attacker can replicate or reconstruct its parameters, thereby training a functionally similar substituted model for malicious purposes. So, in this method, hackers, e.g., train a victim model using captured testing datasets with similar structure to the original model. Subsequently, they substitute the original model with the manipulated victim model, which can lead to system failures or erroneous operations, thereby posing significant security and safety risks to the respective device and/or user (e.g., vehicle and vehicle passengers)

To detect such intrusions, watermarking methods embedding information into images by subtly modifying visually insignificant pixels may be applied. However, they may be vulnerable to adversarial attacks. Examples of watermark methods for RNN model need cloud-based verification and terminal-based generation and cannot meet real-time requirements with large resource consumption if computed at the device side e.g., at the vehicle side. Accordingly, those watermarking methods may be not applicable for automotive real-time applications (e.g., intrusion detection for CAN bus communication) and may require much computational resources.

Hence, there may be a demand for an improved concept of watermarking data.

This demand may be satisfied by the subject-matter of the appended independent claims. Optional embodiments thereof are disclosed by the appended dependent claims.

Embodiments provide a method for watermarking data. The method comprises obtaining data, determining one or more data features of the data, generating a watermark for the data using a predefined function and the data features as input for the function, and embedding the watermark in the data to obtain watermarked data.

In doing so, the data features serve as dynamic fingerprint features which makes it more difficult for attackers to extract and remove watermarks. So, the proposed method may provide a higher level of data integrity and security.

In particular, the proposed method may be applied for watermarking training data, e.g., the labels for training a neural network. In this case, the proposed method, e.g., allows to resist against extraction and removal of label watermarks, which may lead to a higher concealment. In particular, this makes it more difficult to reproduce a neural network for monitoring and verifying watermarked data. Accordingly, the proposed approach makes the above attack scenario more difficult for attackers.

Also, the proposed data feature-based watermarking method may require less computing resources than other watermarking techniques. This, e.g., allows to apply proposed approach in real-time applications, for example, for an IDS for a CAN.

In some embodiments, the data features are indicative of a data structure profile of the data. A skilled person will appreciate that the data features may be indicative of various data structure profile attributes. In practice, the data features, therefore, may be indicative of one or more attributes of the data structure profile of the data. The data structure profile, e.g., may be represented by a flatness, a mean, a variance, a skewness, and/or a kurtosis.

Accordingly, the data features may be indicative of at least one of a flatness, a mean, a variance, a skewness, and a kurtosis of the data.

The method may further comprise transmitting the watermarked data. In doing so, e.g., the watermark data may be provided to an IDS or for training a neural network for an IDS.

As the skilled person will appreciate, proposed watermarking method provides individual watermarks for different data packages.

In some applications, the data includes communication data.

The communication data, for example, includes a CAN message. In practice, the proposed approach, for example, it is applied for monitoring a CAN of a vehicle. In doing so, the level of security of the vehicle may be increased and cyber attacks against the vehicle may be made more difficult. In this way, also the level of safety for the vehicle and potential passengers may be increased.

In some embodiments, the method further includes providing the data together with the watermark for training a neural network based on the data and the watermark as training data. In doing so, the neural network may be enabled to verify the integrity of data watermarked by the proposed watermarking method.

Further embodiments provide a method for training a neural network. The method comprises obtaining watermarked data obtainable by an embodiment of the proposed watermarking method, and training the neural network based on training data including the data and the respective watermark.

Further embodiments provide a neural network obtainable by an embodiment of the proposed (training) method for training a neural network.

Further embodiment provide a method for an intrusion detection system (IDS) the method comprising providing a neural network according to the proposed approach for intrusion detection, applying the neural network to watermarked data thereby predicting, for the watermarked data, a watermark indicative of a predefined function and data features as input for the function, and comparing the predicted watermark with a reference watermark (indicative of a predefined function and data features as input for the function) for the watermarked data to detect an attack.

The skilled person will appreciate that the proposed approach may be fully implemented in a computer program.

Accordingly, embodiments may provide a computer program comprising instructions which, when the computer program is executed by a computer, cause the computer to carry out an embodiment of any of the proposed methods and/or to provide an embodiment of the proposed neural network according.

Further embodiments provide an apparatus comprising one or more interfaces for communication and a data processing circuit configured to execute an embodiment of any of the proposed methods and/or to provide an embodiment of the proposed neural network.

Further, embodiments are now described with reference to the attached drawings. It should be noted that the embodiments illustrated by the referenced drawings show merely optional embodiments as an example and that the scope of the present disclosure is by no means limited to the embodiments presented:

Brief description of the drawings

Fig. 1 shows an overview of attacks utilizing physical connections like the On-Board Diagnostics II (OBD-II) port, as well as remote methods such as Bluetooth, WiFi, and cellular networks, e.g., to infiltrate a CAN bus;

Fig. 2 shows a flow chart schematically illustrating an embodiment of a method for watermarking data;

Fig. 3 shows a flow chart schematically illustrating an exemplary implementation of the proposed approach;

Fig. 4 shows an exemplary generation of dynamic watermarks;

Fig. 5 schematically illustrates an embedding of dynamic watermarks for a CAN bus data packet/-package;

Fig. 6 schematically illustrates a training of a neural network and an intrusion detection by the trained neural network based on dynamic watermarks;

Figs. 7a - 7c show test results of the proposed approach in comparison with other watermarking techniques; and

Fig. 8 shows a block diagram schematically illustrating an exemplary embodiment of an apparatus according to the proposed approach.

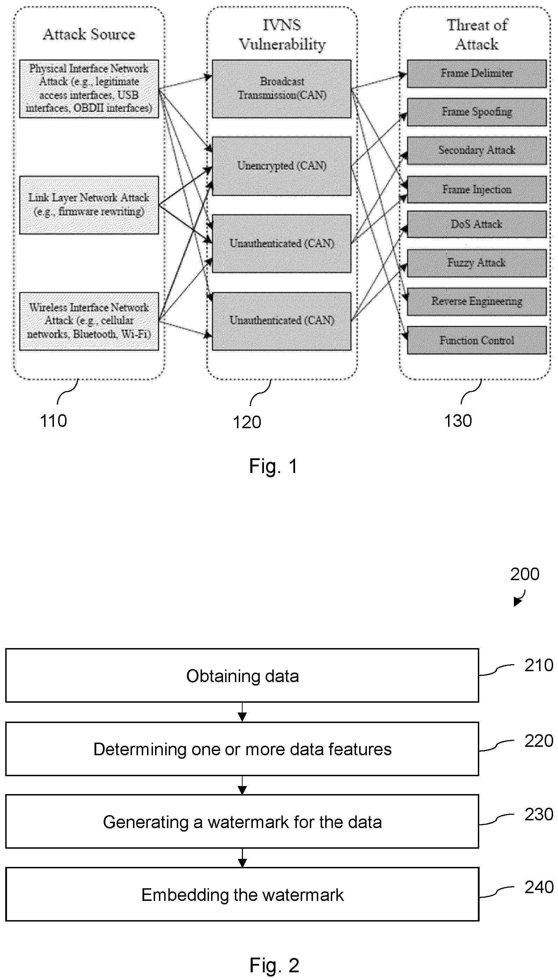

Networks and computer applications may be prone to different kinds of attacks. Fig. 1 shows an overview of attack source 110, In-Vehicle Networks (IVNS) Vulnerabilities 120, and attack threat relationships 130.

As outlined above, AI-based IDS can be compromised through model extraction attacks or adversarial black-box attacks. In such attacks, an adversary queries a victim model extensively, collecting input-output pairs. Using this data, the attacker trains a substitute model that mimics the victim model's behavior. This substitute model can then be used to bypass the IDS, as it operates similarly to the original but is under the attacker's control.

The present disclosure proposes a solution to such security problem. The solution suggests a neural network configured to predict for dynamic watermarks indicative of a predefined function and data features of data are processed by the neural network. A skilled person having benefit from the present disclosure will appreciate that this makes it more difficult to mimic the neural network's capabilities which may allow to detect a substitute model (more reliably).

Fig. 2 shows a flow chart schematically illustrating an embodiment of a method 200 for watermarking data;

In context of the present disclosure, data watermarking (watermarking data) is a technique used to embed hidden information within a digital signal, such as audio, video, image, communication data (e.g., messages) or text data. This embedded information, known as a watermark, is typically used to verify the authenticity or integrity of the signal, identify ownership, or trace the source of the data. Unlike metadata, which is added to the file and can be easily removed, a watermark is integrated into the content itself, making it more resistant to tampering. Watermarks can be designed to be either robust, surviving various transformations and attacks, or fragile, becoming altered or destroyed if the content is modified. This makes data watermarking a valuable tool for copyright protection, tamper detection, and secure data distribution.

Method 200 comprises obtaining 210 data. It is noted that the proposed approach is not limited to any kind or type of data. So, the skilled person having benefit from the present closure will appreciate that the proposed approach may be applied to any kind or type of data where data watermarking may be applied.

Data watermarking can be applied to various types of digital content to ensure authenticity, ownership, and integrity. It is commonly used to protect digital images and photographs from unauthorized use and distribution. In the media and entertainment industries, video watermarking helps track and protect video content. Audio watermarking is used to embed information in music and other audio files to prevent piracy and unauthorized distribution. Text data, such as PDFs, and other kind of text documents, as well as communication data can also be watermarked to protect sensitive information and/or intellectual property. In fields like CAD and 3D printing, watermarking helps protect the design and intellectual property of 3D models. Software applications can use watermarking to prevent unauthorized copying and distribution. Additionally, important financial documents can be watermarked to ensure their authenticity and prevent tampering. These applications highlight the versatility of data watermarking in protecting various forms of digital content.

Method 200 further comprises 220 determining one or more data features of the data. In context of the present disclosure, the data features can be understood as individual measurable properties or characteristics of the data. Accordingly, they may be also referred to as data variables or data attributes. They represent the input data used by algorithms to make predictions or classifications. In particular, the data features may be a numerical value representative of any of the above properties are characteristics of the data.

In some embodiments, the data features are indicative of a data structure profile of the data. For example, the data features are indicative of a distribution of values in the data.

In practice, the data features may be indicative of at least one of a flatness, a mean, a variance, a skewness, and a kurtosis of the data.

As mentioned above, the proposed approach, e.g., is applied for watermarking text data for communication data like CAN messages or other kind of communication data.

For text data or communication data, particularly in the context of CAN messages, the data features can be described as follows:

Flatness may represent a uniformity or consistency in data values of text data or communication like CAN messages. For some text data, it might indicate how evenly distributed certain keywords or phrases are throughout the dataset. In other words, it may refer to the smoothness, evenness, or uniformity of data. In audio data, it may represent how noise-like a sound is versus being tonal. In video data, it may indicate uniformity in color or brightness.

The mean may represent an average value of a particular data set or of the whole CAN message. For some text data, this could be the average length of messages or the average frequency of specific terms. So, the mean may be the sum of all data points (of the data) divided by the number of points. In audio data, it may represent the average amplitude or frequency. In video data, it may represent the average pixel intensity or color value.

Variance may represent the degree of spread or dispersion in the data values (around the mean). In CAN messages, it could indicate how much the length or frequency of messages varies from the average. In audio data, it may represent the variability in amplitude or frequency. In video data, it may represent the variability in pixel intensity or color.

Skewness they represent the asymmetry in the distribution of data values. For some text data, it might show whether there are more short messages than long ones or vice versa. In audio data, it may represent the asymmetry in the distribution of frequencies. In video data, it may represent the asymmetry in the distribution of pixel values.

Kurtosis may represent the "peakedness" or "tailedness" of a distribution of the data values. In the context of CAN messages, it could indicate the presence of outliers or extreme values in message lengths or frequencies. In audio data, it may represent the sharpness of the peak in the frequency distribution. In video data, it may represent the sharpness of the distribution of pixel values.

For determining the data features, and appropriate metric for analyzing the data may be used.

As well, method 200 comprises generating 230 a watermark for the data using a predefined function and the data features as input for the function.

Further, method 200 comprises 240 embedding the watermark in the data to obtain watermarked data.

As mentioned above, watermarking is a technique used to embed information into a host signal, such as an image, audio, or data packets, in a way that is imperceptible to the user but can be detected and extracted later.

During the embedding phase, an algorithm a combined a so-called "host signal" (e.g., the data) with the watermark (data), thereby modifying the host signal in a way that the changes are not noticeable. The watermarked data is then transmitted or stored, with the watermark remaining embedded. Then, when needed, e.g., for verification for authentication, the watermark can be detected and extracted from the watermark data using an appropriate algorithm, often requiring a key or some form of authentication.

In the context of a Controller Area Network (CAN) message, the watermark can be embedded in a data field of the CAN message by modifying certain bits in a way that does not affect the overall functionality of the message but allows the watermark to be detected later. The watermarked CAN message may be transmitted over a network as usual, with the embedded watermark traveling with the message. At a receiving end, the watermark can be extracted from the CAN message to verify its integrity and authenticity, ensuring that the message has not been tampered with during transmission. This technique is particularly useful in automotive and industrial applications where data integrity and security are critical.

As the skilled person will appreciate, various examples of embedding algorithms may be used for embedding the watermark into data. Examples include the Discrete Cosine Transform (DCT), which transforms the data into the frequency domain, allowing the watermark to be embedded in the less perceptible high-frequency components. Another example is the Discrete Wavelet Transform (DWT), which also transforms the data into the frequency domain but provides both spatial and frequency information, making it robust against various types of attacks. Singular Value Decomposition (SVD) is another technique that decomposes the data into singular values, with the watermark embedded by modifying these values, known for its robustness and imperceptibility. Hessenberg Decomposition involves matrix factorization and is used to embed watermarks in a way that maintains the quality and robustness of the host signal. Additionally, hybrid algorithms combine multiple techniques, such as DWT and Discrete Tchebichef Transform (DTT), to leverage the strengths of each method and provide enhanced security and robustness. These algorithms are widely used in various applications, including digital images, audio, video, and even data packets like CAN messages, to ensure data integrity and authenticity.

An AI-based intrusion detection system (IDS) can leverage watermarked data to enhance its ability to detect attacks by ensuring data integrity and authenticity. Watermarking involves embedding a unique identifier into the data, which remains imperceptible during normal operations but can be extracted and verified when needed. When data packets, such as those in a Controller Area Network (CAN), are watermarked, the IDS can use these embedded markers to verify that the data has not been tampered with during transmission.

In embodiments of IDS according to the present disclosure, a neural network may be used to verify the integrity and/or authenticity of data, e.g., CAN messages, for detecting attacks.

For this, the neural network (of the IDS or any other application) may analyze the watermarked data for any anomalies. If an attacker attempts to alter the data and/or inject data, the neural network can check if the data is watermarked appropriately. By comparing an extracted watermark (if any) with the expected watermark, the neural network can identify unauthorized modifications for injected data, signaling a potential intrusion, as laid out in more detail later.

As mentioned before, the proposed approach, in practice, may be applied in a network and/or a communication application. In such applications, the method may further comprise transmitting the watermark data. This may enable a recipient of the watermark data to verify the integrity and/or authenticity of the data.

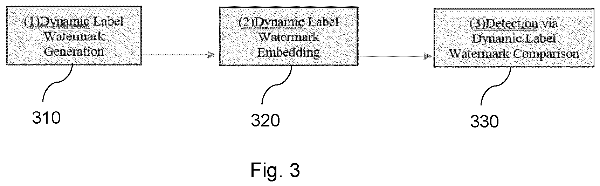

Further aspects are now described below with reference to further embodiments or parts thereof as depicted in Figs. 3 to 7. It is noted that even though aspects may be explained in connection with a CAN and/or an IDS, they may be applied analogously for other applications of data watermarking.

Fig. 3 shows a flow chart schematically illustrating an exemplary implementation of the proposed approach.

In accordance with the proposed approach, the implementation features a dynamic label watermark for a neural network, also referred to herein as "model", (e.g., a time series based recurrent neural network or any other appropriate network type) for an intrusion detection system, e.g., to defend against adversarial attacks and to accurately detect intrusions (e.g., in a CAN bus communication) at the same time. In practice, it may be implemented to solve a real-time prediction problem compared with any cloud-based solution.

As can be seen, applications may be (only logically) divided three parts (in practice, those parts may be distributed differently, e.g., over more or less software modules).

The overall process is composed of (1) dynamic label watermarking generation 310; (2) dynamic label watermark embedding 320; and (3) detection 330 via dynamic label watermark comparison between the embedded ones and the outputted ones.

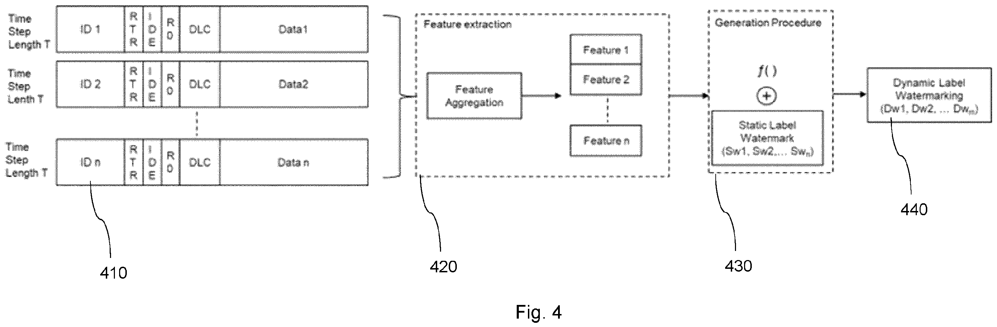

Fig. 4 shows an exemplary generation of dynamic watermarks.

In the example of Fig. 4, the data includes communication data, e.g., including (one or more) CAN messages (or any other type of messages). As can be seen, the communication data includes different types of information including, for example, an identifier ID, a remote transmission request bit RTR, an identifier extension bit IDE, a reserve bit r0, data length code DLC, and/or a data packet/payload (e.g., 8bytes; Data 1, Data 2, Data 3, Data n). It is proposed to group the communication data by (CAN) ID which allows for the extraction of dynamic fingerprint features (data features) per group (e.g., Data 1 to Data n). Messages with the same (CAN) ID may exhibit temporal characteristics.

In a following step 420, data features of the communication data, here, e.g., data features of the group, are extracted and aggregated. For example, dynamic fingerprint features are extracted from a CAN signal/message. For example, feature 1 (flatness f), feature 2 (mean u), feature 3 (variance $\sigma^2$), feature 4 (skewness k), and feature 5 (kurtosis K) are selected as dynamic fingerprint features. It is noted that the features selections can be defined by a user and/or the features may be determined for a certain time step or series/duration T of time steps t. For this, one may extract the sequence $x^i_T$ of the i-th column of the sample X (sample X is a CAN bus message) at T time step. $v_t$ represents the value of CAN bus message at time t for the i-th column. $E^i_T$ is the expectation value.

The features are calculated as follows:

$$f^i_T = \frac{\sigma^i_T}{\mu^i_T}$$

$$\mu^i_T = \frac{\sum_{t=1}^{T} v_t}{T}$$

$$\sigma^i_T = \frac{\sum_{t=1}^{T} \left(v_t - \mu^i_T\right)^2}{T}$$

$$k^i_T = \frac{E^i_T\left(x^i_T - \mu^i_T\right)^3}{\sigma^{i\,3}_T}$$

$$K^i_T = \frac{\mu^{i\,4}_T}{\sigma^{i\,4}_T}$$

Then, the features are provided to a following watermark generation procedures step 430. In this step, a predefined function for generating a dynamic watermark is applied with the obtained features as input to the predefined function. The shown example proposes to use *function f()* to create the dynamic watermark DW [Dw1, Dw2, ... Dw$_m$] with the inputs of Feature[feature1, feature2, ...feature n] and static watermark SW[Sw1, Sw2, ... Sw$_m$]. Note here, the function can be one-dimension convention or others whichever is feasible. DW [Dw1, Dw2, ... Dw$_m$] = f (Feature[feature1, feature2, ...feature n], SW[Sw1, Sw2, ... Sw$_m$])

Optionally, the dynamic watermark may be combined (by a mathematical operation) with a static label watermark. The resulting dynamic watermark ("dynamic label watermark") is provided to a dynamic label watermarking step 440 where the watermark is embedded into the data, here: communication data.

In some examples, a pre-processing of the CAN bus data may be applied prior to the above processing. For example, frames may need to have 8 bytes. So, frames which have less than 8 bytes may be extended, e.g., by padding with zeros to extend them to 8 bytes. Optionally, data may be uniformly converted from hexadecimal to decimal. However, the skilled person will understand that the proposed method may be applied for different formats and sizes of the data.

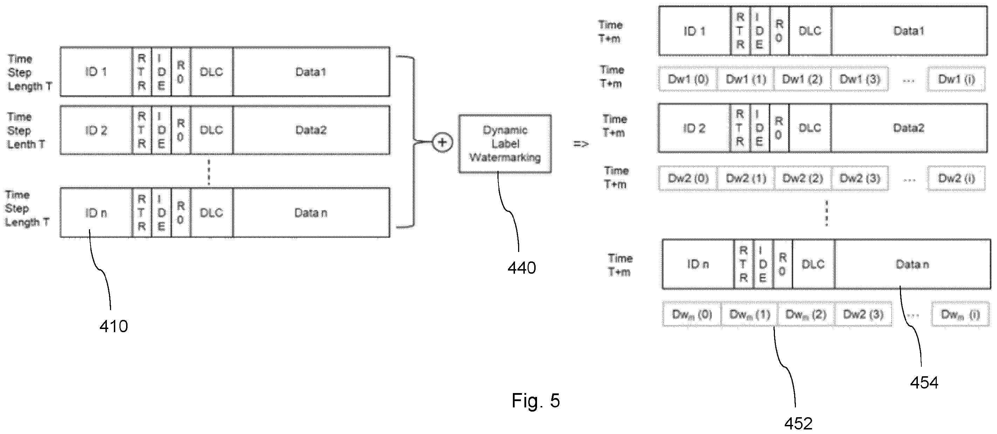

Fig. 5 schematically illustrates an embedding of the proposed dynamic watermarks in data, e.g., for a CAN bus data packet/package. As can be seen in Fig. 5, the data, e.g., communication data like the shown CAN messages 454 each may be divided in different data/bit portions for different purposes, as laid out above in more detail. According to embodiments of the proposed approach, the CAN messages are watermarked with a respective watermark for their data features. That is, CAN message ID 1 is watermarked with the watermark indicative of data features of CAN message ID 2, CAN message ID 2 is watermarked with the watermark indicative of data features of CAN message ID 2 and so forth.

In doing so, embedding a watermark in data may involve modifying the data in a way that includes the watermark without affecting the data's (primary) function. It is noted that this may be analogously applied to various types of data, including communication data like CAN messages, as well as images, audio, video, and text (even though the present disclosure may particularly relate to communication data).

For communication data, such as CAN messages, specific bits within the message frame can be altered. This might involve modifying reserved bits in the control field, using bit stuffing techniques, or adjusting the Cyclic Redundancy Check (CRC) field. These methods may ensure the watermark is embedded without impacting the message's functionality or integrity.

In images, watermarks can be embedded using spatial or frequency domain techniques. Spatial domain methods involve directly modifying pixel values, while frequency domain methods use transformations like Discrete Cosine Transform (DCT) or Discrete Wavelet Transform (DWT) to embed the watermark in the image's frequency components. These techniques ensure the watermark is imperceptible to the human eye but can be detected algorithmically.

For audio data, watermarks can be embedded by modifying the audio signal in the time or frequency domain. Techniques like echo hiding, phase coding, or spread spectrum can be used to embed the watermark in a way that is imperceptible to listeners but detectable by algorithms.

Video watermarking often combines techniques used for images and audio. Watermarks can be embedded in individual frames using image watermarking techniques or in the audio track. Additionally, temporal modifications, such as altering frame sequences, can be used to embed watermarks.

In text data, watermarks can be embedded by altering formatting, using invisible characters, or modifying the structure of the text. Techniques include changing line or word spacing, using different fonts, or embedding metadata. These methods ensure the watermark is hidden within the text but can be extracted when needed.

By using these techniques, watermarks can be securely and imperceptibly embedded in various types of data, maintaining their integrity and functionality while allowing for the detection and extraction of the watermark.

The watermarked data, then, may be used for further processing. Applications, e.g., the watermark data then communicated within a network and/or used for application-specific functions. Also, the watermarked data may be provided for training a neural network together with the watermark for training the neural network based on the data and the watermark as training data such that the neural network can predict the watermark integrated in the watermarked data.

In connection with the proposed approach, data watermarking provides an individual signature of the data based on individual characteristics or an individual fingerprint of the raw data. So, the proposed approach makes data watermarking less predictable for external attackers as laid out in more detail later.

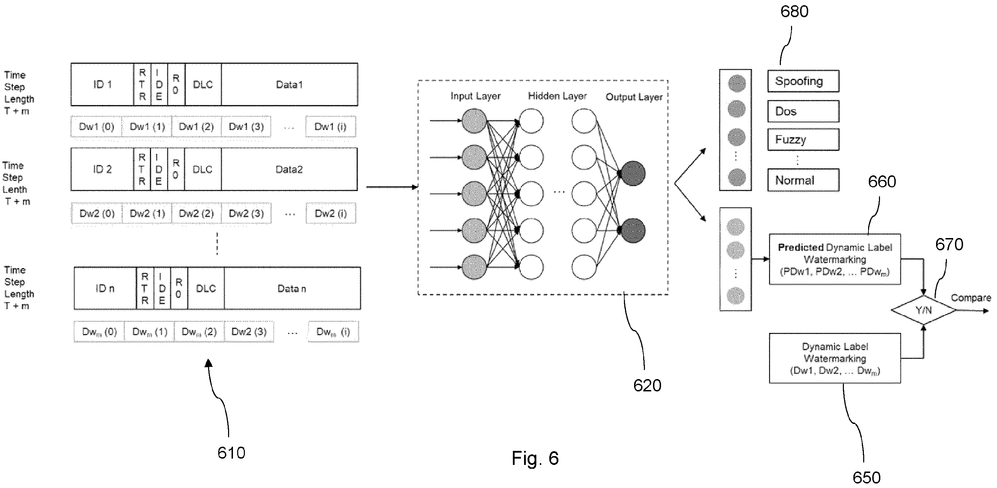

This makes it more difficult for attackers to reproduce watermarks and/or a neural network (e.g., a so-called "victim model") which mimics capabilities of another neural network configured to predict such watermarks for accordingly watermarked data, as, e.g., in AI-based IDS. This is shown exemplarily connection with such IDS use case as shown by Fig. 6.

The proposed example relates to an IDS providing a neural network 620 which is configured to detect intrusions from communication data, more specifically from CAN messages 610. The CAN messages 610 have been watermarked in accordance with the proposed data watermarking approach. The neural network 620 is trained to predict watermarks for data watermarked according to the proposed approach. For this, an appropriate training may be applied, as laid out in more detail later.

Examples of the neural network include various types of neural networks (also referred to herein as "models") including feedforward neural networks, convolutional neural networks (CNNs), recurrent neural networks (RNNs), long short-term memory networks (LSTMs), generative adversarial networks (GANs), autoencoders, and transformers. The present example, the neural network is a RNN network/model.

For intrusion detection, the neural network 620 is applied to the watermarked data 610 to predict if the watermark data 610 stems from an attack or intrusion and optionally, if so, to predict an attack type or intrusion type 680. Further, the neural network 620 is configured to predict a watermark 660 of the watermarked data 610 for comparison 670 with a respective reference (the actual) watermark 650 for the watermark data in accordance with the proposed data watermarking approach to verify or authenticate the watermarked data and/or the prediction.

In practice, the detection, verification, and/or authentication may be carried out in real-time.

A training method for obtaining such neural network according to the proposed approach suggests obtaining watermarked data obtainable by an embodiment of the proposed data watermarking approach. Further, the training method comprises training the neural network based on training data including the watermarked data and respective reference watermarks such that the neural network is trained to predict watermarks for input data. The reference watermarks may be obtained in accordance with the proposed watermark generation. Accordingly, the will be indicative of a predefined function for generating the watermark and data features (of the raw data) as input to the predefined function.

As the skilled person will understand, in doing so, the watermarked data may be used as samples and the reference watermarks as ground truth during training. In doing so, the neural network may be (iteratively) trained such that predictions of the neural network for the watermark approach the reference watermark. This process may be repeated until a predefined accuracy has been reached. The skilled person will appreciate that different training techniques for machine learning may be applied for this.

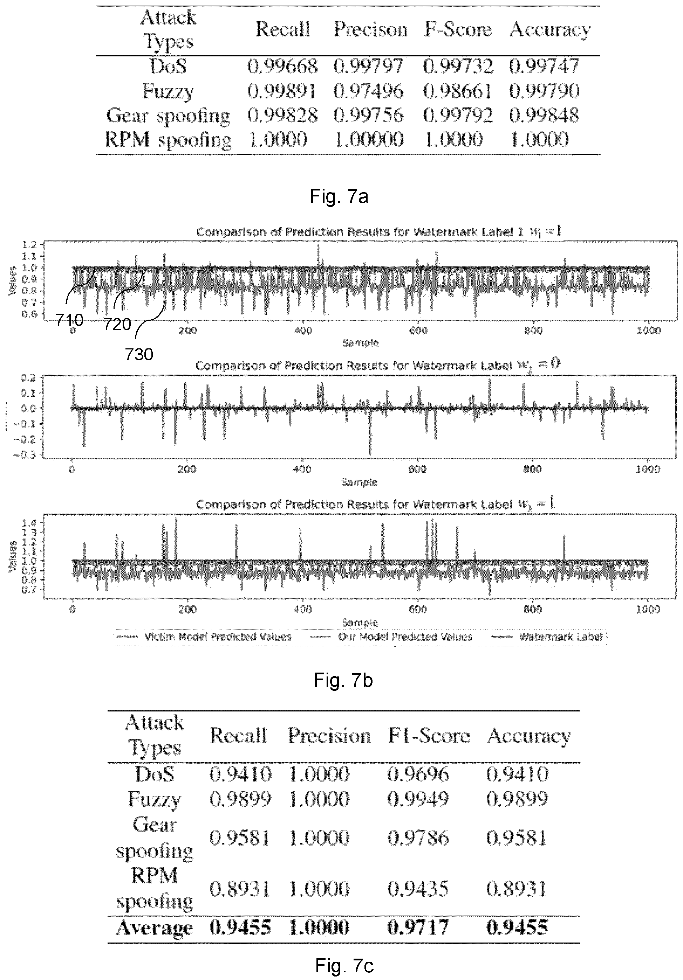

The effectiveness of the proposed approach is now laid out below with reference to Figs. 7a to 7c illustrating test results for the proposed approach in comparison with other watermarking techniques.

To prove the effectiveness of the proposed model with dynamic label watermark, the following assumptions about construction of a victim model are made:

It is assumed that the attacker can only observe the model's inputs and outputs without having access to its internal structure and parameters. In this scenario, the attacker uses these inputs and outputs to train a functionally similar model/victim model.

Exemplary attacks include the following attack steps:

- Step 1: The hacker injects data to steal and record our model's output results from the CAN gateway.
- Step 2: The hacker uses the data to train a similar model with our method's input-output characteristics.
- Step 3: Our method is then replaced with the attacker's trained victim model.

- Step 4: The output of this trained victim model will lead to erroneous decisions

Such attacks are referred to as "adversarial black-box attacks".

Particularly, the attacker may use an LSTM based network to substitute a GRU (Gated Recurrent Unit) model (as the original model).

Fig. 7a shows that the victim model demonstrates detection performance very close to the GRU model (not trained according to the proposed approach) across various attack types, particularly for RPM spoofing attacks, where all metrics reach 100%. This indicates that the victim model effectively captures our method's behavior, exhibiting high accuracy and consistency in detecting various conventional intrusions.

Therefore, it can be inferred that the victim model has successfully emulated the functionalities of the GRU model without dynamic label watermark, making it easy for hackers to use the victim model as a substitute for the GRU model.

In 7b, curve 710 represents the reference watermark (also referred to as "label" or "preset label"), serving as the benchmark for detecting model replacement or theft. Curve 720 illustrates the predictions of the proposed neural network/model, closely matching the reference watermark, indicating that neural network trained in accordance with the proposed approach accurately predicts the preset labels with high precision and stability. In contrast, curve 730 representing regression results of the victim model shows significant fluctuations across different labels compared to the curves 710 and 720. This indicates that, while the victim model attempts to mimic the behavior of the GRU based IDS with the dynamic label watermarking approach, its prediction results exhibit noticeable deviations and instability when incorporating the watermarks.

An example of performance of the model (GRU) to detect intrusion attack via dynamic label watermark is shown in the table of Fig. 7c.

So, as could be shown on one hand, the proposed model is able to predict appropriate watermarks for authentication or verification. In the other hand, it makes it difficult for attackers to mimic the watermark prediction capabilities for victim model. Accordingly, it may avoid injection of malicious data and allows to detect integration of a victim model based on anomalous authentication and/or verification behavior. So, the proposed approach allows to detect adversarial black-box attacks.

To summarize:

a) The proposed approach suggests a real-time solution for AIA-based Intrusion detection systems, e.g., for CAN bus communication via a dynamic label watermark method.

b) In particular, the present disclosure suggests a solution for generating dynamic label watermark datasets, which seamlessly integrates watermarks with dynamic fingerprint features (data features), e.g., extracted from CAN message data. It can resist against extraction and removal of label watermarks, which may lead to to high concealment.

c) the proposed model simultaneously detects conventional intrusions and defends against adversarial black-box attacks in real-time.

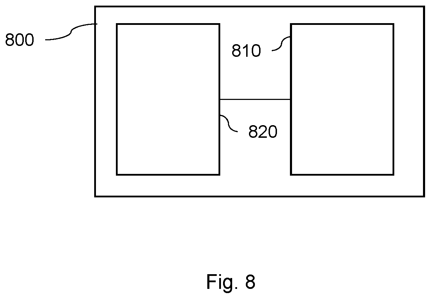

As the skilled person will understand, the proposed approach may be also implemented in/as an apparatus, as laid out in more detail with reference to Fig. 8.

Fig. 8 shows a block diagram schematically illustrating an embodiment of such an apparatus 800. The apparatus comprises one or more interfaces 810 for communication and a data processing circuit 820 configured to execute the proposed method.

In embodiments, the one or more interfaces 810 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 820 may correspond to or comprise any type of programable hardware. So, examples of the data processing circuit 820, e.g., comprise a memory, microcontroller, field programable gate arrays, one or more central, and/or graphical processing units. To execute the proposed method, the data processing circuit 820 may be configured to access or retrieve an appropriate computer program for the execution of the proposed method from a memory of the data processing circuit 820 or a separate memory which is communicatively coupled to the data processing circuit 820.

In particular, the apparatus may be configured for intrusion detection in connection with the proposed method for intrusion detection systems. The skilled person will appreciate that proposed approach may be applied in different applications for intrusion detection. Particularly, embodiments may be applied networks, e.g., computing networks and/or a vehicle networks. Accordingly, the proposed apparatus, e.g., may be implemented in such a vehicle network. In practice, e.g., the apparatus may be implemented in an electronic control unit (ECU) for the purpose of intrusion detection. In this way, attacks on the vehicle may be detected and parried, e.g., to ensure proper functionality of safety-related vehicle functions. In doing so, the proposed approach may lead to an improved vehicle safety.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

**Claims**

1. A method (200) for watermarking data, the method comprising:
   obtaining data (210);

   a) determining (220) one or more data features of the data;
   b) generating (230) a watermark for the data using a predefined function and the data features as input for the function; and
   c) embedding (240) the watermark in the data to obtain watermarked data.

2. The method of claim 1, wherein the data features are indicative of a data structure profile of the data.

3. The method of claim 1 or 2, wherein the data features are indicative of at least one of a flatness, a mean, a variance, a skewness, and a kurtosis of the data.

4. The method of any one of the preceding claims, wherein the method further comprises transmitting the watermarked data.

5. The method of any one of the preceding claims, wherein the data includes communication data.

6. The method of claim 5, wherein the communication data includes a Controller Area Network, CAN, message.

7. The method of any one of the preceding claims, wherein the method further includes providing the watermarked data together with the watermark for training a neural network based on the data and the watermark as training data.

8. A method for training a neural network, the method comprising:

   obtaining watermarked data obtainable by a method according to any one of the preceding claims.
   training the neural network based on training data including the data and the respective watermark to predict watermarks for input data.

9. A neural network obtainable by a method according to claim 8.

10. A method for an intrusion detection system, IDS, the method comprising:

    providing a neural network according to claim 9 for intrusion detection;
    applying the neural network to data thereby predicting, for the data, a watermark indicative of a predefined function and data features as input for the function; and
    comparing the predicted watermark with a reference watermark for the watermarked data to detect an attack.

11. A computer program comprising instructions which, when the computer
    program is executed by a computer, cause the computer to carry out the method of any one of the claims 1 to 8 and/or 10, and/or to provide a neural network according to claim 9.

12. An apparatus (800) comprising:

    one or more interfaces (810) for communication; and
    a data processing circuit (820) configured to execute a method of any one of the claims 1 to 8 and/or 10, and/or to provide a neural network according to claim 9.

**Fig. 1**

**Fig. 2**

Fig. 3

Fig. 4

EP 4 760 554 A1

Fig. 5

Fig. 6

| Attack Types | Recall | Precison | F-Score | Accuracy |
|---|---|---|---|---|
| DoS | 0.99668 | 0.99797 | 0.99732 | 0.99747 |
| Fuzzy | 0.99891 | 0.97496 | 0.98661 | 0.99790 |
| Gear spoofing | 0.99828 | 0.99756 | 0.99792 | 0.99848 |
| RPM spoofing | 1.0000 | 1.00000 | 1.0000 | 1.0000 |

Fig. 7a

Fig. 7b

| Attack Types | Recall | Precision | F1-Score | Accuracy |
|---|---|---|---|---|
| DoS | 0.9410 | 1.0000 | 0.9696 | 0.9410 |
| Fuzzy | 0.9899 | 1.0000 | 0.9949 | 0.9899 |
| Gear spoofing | 0.9581 | 1.0000 | 0.9786 | 0.9581 |
| RPM spoofing | 0.8931 | 1.0000 | 0.9435 | 0.8931 |
| **Average** | **0.9455** | **1.0000** | **0.9717** | **0.9455** |

Fig. 7c

Fig. 8

EUROPEAN SEARCH REPORT

Application Number

EP 25 15 2463

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FERDOWSI AIDIN ET AL: "Deep Learning-Based Dynamic Watermarking for Secure Signal Authentication in the Internet of Things", 2018 IEEE INTERNATIONAL CONFERENCE ON COMMUNICATIONS (ICC), IEEE, 20 May 2018 (2018-05-20), pages 1-6, XP033378713, DOI: 10.1109/ICC.2018.8422728 [retrieved on 2018-07-27] | 1-5,7-12 | INV. G06F21/16 G06N3/09 |
| Y | * p.1, Abstract * * p.1, left column, section Introduction, 2nd paragraph * * p.1, right column, last paragraph * * p.2, left column, Section A * * p.4, left column, section A, 1st paragraph * * p.4, left column, section A, last paragraph * * p.4, right column, section B, first and second paragraph * * figure 1 * | 6 | |
| | ----- | | TECHNICAL FIELDS SEARCHED (IPC) |
| Y | US 2023/379188 A1 (HERMAN DAVID MICHAEL [US] ET AL) 23 November 2023 (2023-11-23) | 6 | G06F G06N |
| A | * paragraph [0032] * | 1-5,7-12 | |
| | ----- | | |

The present search report has been drawn up for all claims

| Place of search | Date of completion of the search | Examiner |
|---|---|---|
| The Hague | 4 April 2025 | Berger, Sebastian |

EPO FORM 1503 03.82 (P04C01)

## ANNEX TO THE EUROPEAN SEARCH REPORT
## ON EUROPEAN PATENT APPLICATION NO.

EP 25 15 2463

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2025

| Patent document cited in search report | Publication date | Patent family member(s) | Publication date |
|---|---|---|---|
| US 2023379188 A1 | 23-11-2023 | CN 117097499 A<br>DE 102023113114 A1<br>US 2023379188 A1 | 21-11-2023<br>23-11-2023<br>23-11-2023 |

EPO FORM P0459

For more details about this annex : see Official Journal of the European Patent Office, No. 12/82